# EUROPEAN PATENT SPECIFICATION

(11) **EP 1 883 312 B1**
(45) Date of publication and mention of the grant of the patent: **23.12.2015**
(21) Application number: 06753722.5
(22) Date of filing: 18.05.2006
(51) Int. Cl.: A23G 9/28, A23P 1/12, A23G 3/20, A23G 3/02

(54) **METHOD FOR THE PRODUCTION OF FROZEN BARS WITH VARIATIONS IN SECTION**
VERFAHREN ZUR HERSTELLUNG VON GEFRORENEN RIEGELN MIT QUERSCHNITTVARIATION
PROCEDE DE FABRICATION DE BARRES SURGELEES DE SECTION VARIABLE

(30) Priority: 18.05.2005 FR 0504999
(43) Date of publication of application: 06.02.2008
(73) Proprietor: MARS, INCORPORATED, McLean, VA 22101-3383 (US)
(72) Inventor: FLAMBEAU, Michel, F-67000 Strasbourg (FR); GERBER, Yves, F-67100 Strasbourg (FR); PICQUET, Alain, F-67310 Wasselonne (FR)
(74) Representative: Hirsch & Associés
(86) International application number: PCT/EP2006/004740
(87) International publication number: WO 2006/122815

(56) References cited:
- DE-C1- 3 436 578
- US-A- 4 542 028
- US-A- 4 851 247
- US-A- 4 925 689
- US-A1- 2003 054 071

## Description

The present invention relates to the production of food bars, in particular frozen food bars.

In the field of frozen confectionery, it is known to produce bars with a constant section throughout their length. A traditional apparatus for producing them comprises a horizontal extrusion nozzle arranged fixed just above a horizontal conveyor belt. The frozen product is extruded through the nozzle and is deposited on the conveyor belt which travels in the direction of extrusion of the product. The speed of travel of the conveyor belt and the speed of extrusion of the frozen product are constant. A continuous bar of frozen product- also commonly called a strip - is thus formed on the conveyor belt, the bar having a constant section throughout its length. Downstream of the extrusion nozzle, the conveyor belt passes into a cooling tunnel in which the temperature of the product is reduced in order to solidify it. Outside the cooling tunnel, a knife at regular intervals cuts the continuous bar into bars of the desired length which are then, if appropriate after coating, packaged in their wrappers.

It is also known to produce frozen food products such as ice cream or sorbet using the molding technique, which allows the production of products of a given length optionally having raised shapes.

It is now sought to provide frozen bars in the form of a series of a succession of balls or spheres attached to one another while having a flat common base.

More generally, there is a need to provide food bars, in particular frozen bars, with raised patterns on the top, or also on their lateral sides while having a flat base.

The natural solution which occurs to a person skilled in the art to produce such frozen bars would be to mould them.

However molding has the drawback of being a rather slow and relatively costly method.

But apart from molding there is no satisfactory technique for producing such bars. The other known techniques aim to produce products in the form of braids, twists, flatbreads as described for example in US-A-4,536,147, US-A-5,391,073, EP-A-0 044 689, EP-A-0 223 884, EP-A-0 328 170 and WO 99/41995 or also bars with very irregular and random reliefs as in EP-A-1 356 743.

Further, it is known from US-A-4 542 028 an apparatus and a method for producing a composite confection product comprising a multiplicity of superimposed extruded thin layers and interleaved layers. The superimposed thin layers are formed from a succession of aligned slotted extrusion outlets or by successive relative forward and backward passages of a slotted extrusion outlet with respect to a substrate.

The aim of the present invention is therefore to provide a technology which allows the production of food bars, in particular frozen bars, having raised patterns on the top, or also on their lateral sides while preferably having a flat base. The invention is also aimed at allowing the raised pattern to be regular and repetitive, for example in the form of balls attached to one another.

To this end, the present invention provides a method for the production of a bar of plain food product with an extrusion nozzle according to claim 1.

According to preferred embodiments, the method comprises one or more of the following characteristics:
- during the stage of extrusion, obtaining a variation in the quantity of extruded product deposited on the flat support per unit of length in the direction of travel, by the relative movement between the nozzle and the flat support;
- during the stage of extrusion, maintaining the axis of the nozzle in the same vertical plane associated with the flat support and parallel to the relative rectilinear direction of travel between the nozzle and the flat support;
- during the stage of extrusion, applying a unidirectional rectilinear movement at a constant speed to the flat support during extrusion; and applying to the nozzle a movement with a reciprocating component according to the direction of movement of the flat support;
- during the stage of extrusion, ensuring that the average value of the component of the vector speed of movement of the nozzle according to the direction of movement of the flat support, during the movement of the nozzle in the direction of movement of the flat support, is greater than the speed of movement of the flat support;
- during the stage of extrusion, ensuring that the speed of extrusion of the product is greater than or equal to the speed of movement of the flat support;
- during the stage of extrusion, either keeping the axis of the nozzle parallel to itself during the movement of the nozzle, the nozzle only moving according to one direction parallel to the flat support, or maintaining the axis of the nozzle parallel to itself during the movement of the nozzle, the movement of the nozzle including at least one component parallel to the flat support and at least one component perpendicular to the flat support, or swinging the nozzle about an axis which is both parallel to the flat support and perpendicular to the direction of travel of the flat support;
- during the stage of extrusion, moving the nozzle in a repetitive manner along the same path with the same speed pattern;
- during the stage of extrusion, keeping the angle between the axis of the nozzle and the flat support between -5 and +45 degrees, the nozzle being oriented in the direction of travel of the flat support;
- the application, in a continuous manner, of the unidirectional rectilinear movement at a constant speed of the flat support during the extrusion; and cutting the bar of product up into discontinuous elements;
- providing the flat support in the form of an endless conveyor belt;
- the horizontal arrangement of the flat support;
- during the stage of extrusion, maintaining the speed of extrusion of the product constant;
- the food product comprises at least one frozen composition, the method comprising a stage of cooling the bar formed on the flat support;
- providing the nozzle with lateral cheeks projecting outwards relative to the outlet of the nozzle;
- the nozzle has two superimposed outlets having a common wall set back relative to the end contour of the nozzle, the method comprising the extrusion of a respective food composition through each of the outlets of the nozzle;
- also including a stage of coating of the bar.

According to another aspect, the invention also provides a device implementing the method of the invention. In particular it provides a device for the production of a bar of food product according to claim 23.

Other characteristics and advantages of the invention will become apparent when reading the following description of preferred embodiments of the invention, given as non-limitative examples and with reference to the attached drawing.
Figure 1 represents a diagram of an installation for extrusion of ice cream.
Figure 2 illustrates the angular positioning of the axis of the nozzle for the installation of Figure 1.
Figure 3 schematically represents possible different sections of the extrusion nozzle.
Figures 4 (a) and (b) are schematic representations of respectively a side view and a top view of an example of a frozen bar which is obtained and Figure 4 (c) a photograph of the frozen bar which is obtained coated in chocolate.
Figure 5 is a perspective schematic view of an extrusion nozzle having lateral cheeks.
Figures 6 and 7 each represent another embodiment relative to that of Figure 1.
Figure 8 illustrates the section of a twin nozzle for coextrusion.
Figure 9 is a perspective diagram of the end of a coextrusion nozzle having two superimposed outlets.
Figure 10 illustrates the possibility of obtaining a lateral swinging movement of the nozzle.
Figure 11 shows the break-down of the vector speed of movement of the nozzle into two perpendicular components.

According to the invention, extrusion of the food product through a nozzle is once again used. The food product is extruded through the nozzle above a flat support so that the extruded product is deposited on the flat support.

During the extrusion, a relative movement between the nozzle and the flat support is ensured. The relative movement is defined in order to produce, overall, a relative rectilinear travel between the nozzle and the flat support. By means of this travel, the extruded product deposited on the flat support forms a bar of product.

Moreover, during the extrusion, a variation in the quantity of extruded product deposited on the flat support per unit of length in the direction of travel is ensured. Consequently, a variation in section is obtained along the bar formed.

It is advantageous to choose the relative movement between the nozzle and the flat support in order to obtain not only the travel mentioned above, but also a variation in the quantity of extruded product which is deposited on the flat support per unit of length in the direction of travel. In this case, the speed of extrusion of the product at the outlet of the nozzle can be constant.

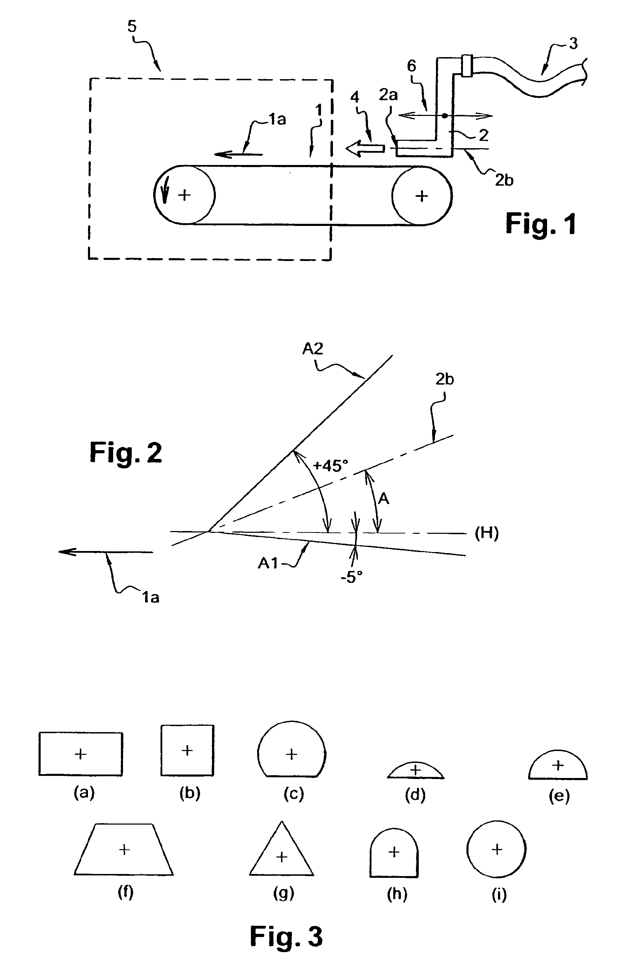

Figure 1 illustrates a particularly simple installation which can implement a preferred embodiment of the invention in order to produce frozen bars from a frozen composition such as ice cream. It comprises an extrusion nozzle 2 and a conveyor 1 in the form of an endless belt 1 which serves as a flat support for receiving the extruded food product. The arrow 4 symbolizes the extruded food product.

The conveyor belt 1 is preferably horizontal. The end 2a by which the extruded product leaves the nozzle 2 is placed above the conveyor belt 1. Thus, the extruded product is deposited by gravity on the conveyor belt 1.

The axis 2b of the nozzle 2 is horizontal and parallel to the direction of travel of the conveyor belt 1. The end 2a of the nozzle is oriented in the direction of travel of the conveyor belt 1.

The nozzle 2 is mounted mobile in translation in the direction of travel of the conveyor belt 1. In other words, the end 2a of the nozzle 2 is capable of moving forward and back relative to the conveyor 1. In order to make this movement possible, the nozzle 2 is supplied with food product by a fixed pumping device or similar - not shown - by means of a flexible pipe 3. As a variant, the flexible pipe 3 is replaced with rigid telescopic tubes. According to another variant, the pipe 3 is replaced with a bellows system.

When the food product is extruded in order to produce the frozen bar, the conveyor belt 1 travels continuously at a constant speed and the food product is extruded at a constant speed at the outlet 2a of the nozzle 2. By contrast, the nozzle 2 is driven by a reciprocating movement from the front to the back relative to the conveyor 1, the end 2a of the nozzle always remaining above the conveyor belt. This reciprocating movement is symbolized by the double arrow 6. In this embodiment, the axis 2b of the nozzle 2 always remains horizontal and contained in the same vertical plane parallel to the direction of travel of the conveyor belt 1 during the extrusion operation. In this case, this vertical plane is one with the plane of the sheet of diagram 1. The reciprocating movement of the nozzle 2 is obtained for example with a linear motor or with a rotary motor with a cam system or also with a pneumatic cylinder.

Considered in the reference frame associated with the end 2a of nozzle 2, the reciprocating movement of nozzle 2 results in a modulation of the speed of travel of the conveyor belt 1. Consequently, the quantity of product deposited by the nozzle 2 on the conveyor belt 1 per unit of length in the direction of travel of the conveyor belt 1 varies. A bar or strip having a variable section along its length is then obtained.

In the most simple embodiment, the reciprocating movement of the nozzle 2 always has the same distance of travel and the same speed pattern. The section of the resulting bar varies in this case according to an identical pattern which is repeated throughout its length.

In order to allow its extrusion, the temperature of the food product is chosen so that it is not entirely solid while being sufficiently viscous to ensure that the bar of product formed on the conveyor belt retains its shape. In the case of frozen compositions, the formulation is taken into account, which also influences the stability of the shape after extrusion. Downstream of the nozzle 2, the conveyor belt 1 passes into a cooling tunnel 5 in which the temperature of the product is reduced in order to solidify the bar of food product. Outside the cooling tunnel, in a standard manner, a knife can be provided which, at regular intervals, cuts the continuous bar into bars of the desired length. The thus cut bars can optionally be coated, for example with chocolate, which is also solidified by cooling in another tunnel. Finally, the bars are packaged in their wrappers.

It is advantageous that the nozzle 2 is arranged at a small distance above the conveyor belt 1, for example between 1 and 15 mm, which prevents the extruded product from tending to be crushed as a result of the drop onto the conveyor belt 1 under the effect of its own weight which would have the effect of a reduction in the variations in section in terms of height of the resulting bar. For the same reason, it is preferable that the axis 2b of the nozzle 2 is horizontal as mentioned previously or is at a fixed angle to the conveyor belt 1 comprised between -5 and 45 degrees, the outlet 2a of the nozzle 2 being oriented in the direction of travel of the conveyor belt 1. This angular interval is illustrated by Figure 2 in which (H) represents a horizontal plane, the segments A1 and A2 the extreme angles between which the axis 2b is preferably situated forming an angle A with the horizontal line and the arrow 1a indicates the direction of travel of the conveyor belt 1. As described previously, the reciprocating movement of the nozzle 2 occurs - in this embodiment - according to a horizontal direction parallel to the direction of travel of the conveyor belt 1 as described previously, even if the axis of the nozzle is not chosen to be horizontal.

By way of illustration, the food product can be an ice cream comprising 8 to 16 % by weight of fat, 34 to 45 % by weight of solid matter, the rest being water. In a standard manner it comprises an emulsifier for example fatty acid mono- and diglycerides and a stabilizer such as alginates or guar. Its "overrun" - i.e. the volume of air added to the liquid mixture relative to the volume of the latter - is comprised between 50 and 140 %. The appropriate extrusion temperature is comprised between -4.5 and -6°C.

The frozen composition, in particular ice cream, can also comprise solid inclusions, for example chocolate chips or pieces of biscuit, nuts such as walnuts, almonds, peanuts, hazelnuts or centres thickened for example with wheat-, corn- or rice flour. These inclusions are then introduced into the frozen composition upstream of the nozzle 2.

The shape of the nozzle 2 is chosen as a function of the section of the bar to be obtained. The nozzle 2 can advantageously have a flat lower part, which allows the product to be extruded with a flat base. The resulting bar thus has a flat base allowing the consumer to place it down in a stable manner. But a bar with a flat base can also be obtained with a nozzle 2 which does not have a flat base under the effect of the weight of the product. By way of examples illustrated by Figure 3, the section of the nozzle 2 can be in the shape of a rectangle (a), a square (b), a circle cut by a bowstring (c), a flattened oval (d), a semi-circle (e), a trapezoid (f), a triangle (g), semi-oblong in section (h) or in the shape of a circle (i).

This type of nozzle makes it possible to obtain a resulting bar with a flat base, the section of which varies both in height and in width along the bar. The surface of the section of the nozzle 2 is chosen as a function of the section dimensions to be obtained for the frozen bar.

The speed of travel of the conveyor belt 1, the speed of extrusion at the outlet of the nozzle 2 and the movement speed pattern of the nozzle 2 as well as its distance of travel - which may optionally be varied - are appropriately chosen as a function of the desired variations in section of the resulting bar. The speed of extrusion is preferably chosen slightly greater than the speed of travel of the conveyor belt 1, for example equal to 1.1 to 1.4 times the speed of travel.

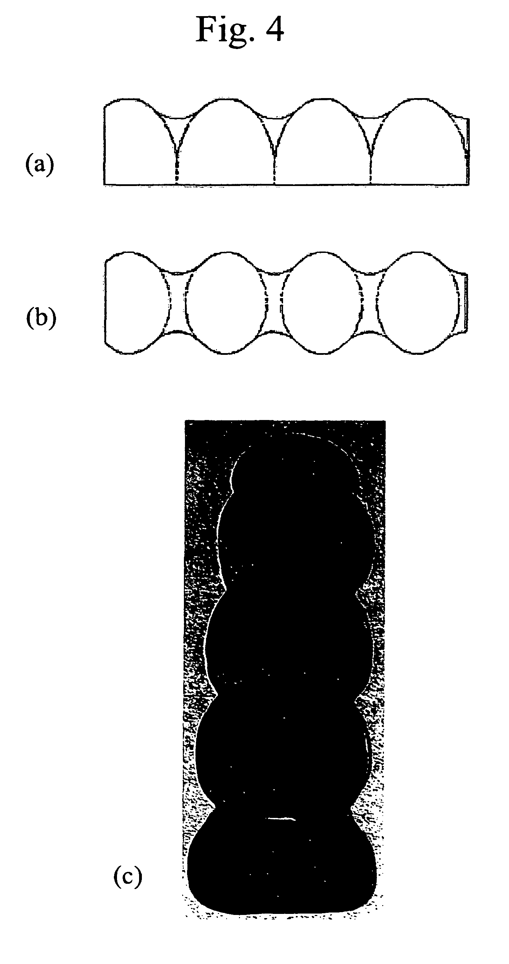

By way of example, the speed of extrusion is 1.2 times the speed of travel of the conveyor belt 1. The distance of travel of the nozzle 2 is 22 mm. The average speed of forward movement of the nozzle 2 is 1.8 times the speed of travel and the speed of backward movement of the nozzle 2 is 4 times the speed of travel. The speed of travel is preferably comprised between 3 and 7 m/min. With these parameters and a nozzle of the type shown in Figure 3 (c), a frozen bar is obtained which is shown in a side view and in a top view in Figures 4 (a) and (b). Figure 4 (c) represents a photograph of the bar obtained coated in chocolate, taken from a point above the bar.

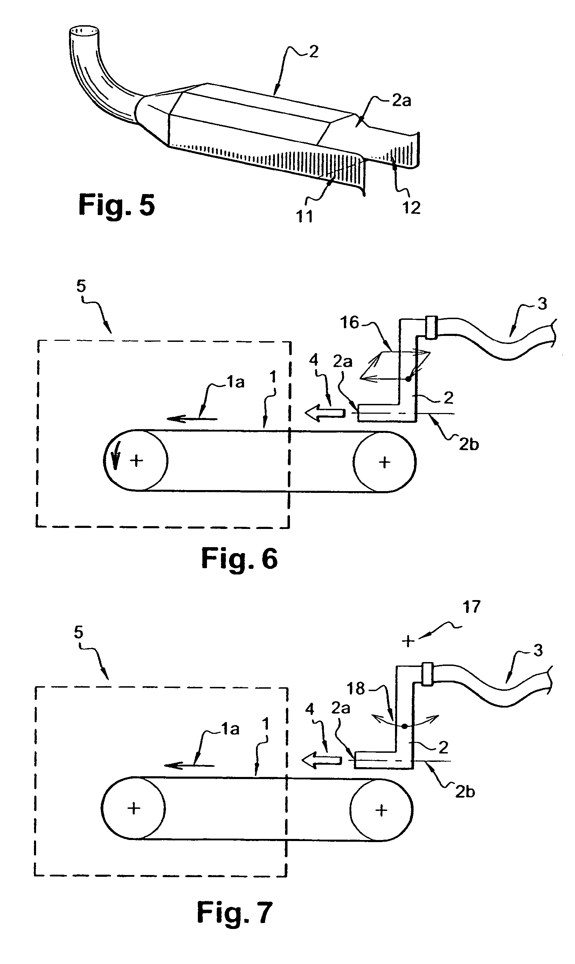

Numerous variants exist. Thus, if the section of the bar obtained is sought not to vary on the sides, but only on the top, it is sufficient to arrange lateral cheeks at the end 2a of the nozzle 2, these cheeks extending beyond the outlet of the nozzle 2 in the direction of travel of the conveyor belt 1. One example of a nozzle with lateral cheeks 11, 12 is illustrated by Figure 5. The free end of each of the lateral cheeks is preferably curved outwards, i.e. on the side opposite the other cheek. Thus, during the reciprocating movement of the nozzle 2, the lateral cheeks maintain the smoothness of the lateral sides of the resulting bar. Consequently, the bar has a constant section widthwise.

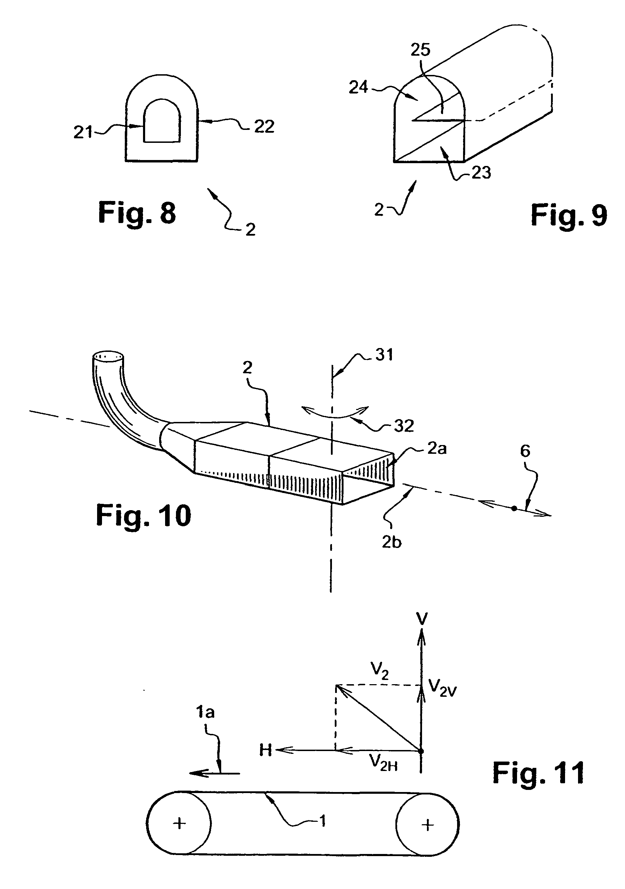

Moreover, it can be provided to use a coextrusion. In particular, it is possible to coextrude two different frozen compositions one inside the other. For this, it is sufficient to use a twin nozzle 2 having a nozzle 21 inside another nozzle 22 as illustrated in Figure 8. Such a twin nozzle 2 also allows a sauce or a syrup, in particular caramel, to be coextruded inside a frozen composition. As a variant, it is possible to coextrude two different frozen compositions one on top of the other. For this, it is sufficient to use a coextrusion nozzle 2 having one outlet 23 superimposed on another outlet 24 as illustrated in Figure 9. In this case, it is advantageous that the common wall 25 of the two outlets is set back relative to the outer perimeter of the end 2a of the nozzle 2. This measure ensures that the two extruded compositions adhere to one another.

In a further developed embodiment illustrated by Figure 6, it is provided that the nozzle 2 can not only move forwards and backwards, but also upwards relative to the conveyor belt 1. The operation is identical to the installation of Figure 1, except as regards the movement of the nozzle 2. In this case, the nozzle 2 always moves in the same vertical plane comprising its axis combining a horizontal movement and a vertical movement. For example, the movement of the nozzle 2 can follow a path in a parallelogram, in particular a rectangle, in repetitive manner. In other words, the nozzle 2 moves forward, then rises, then moves back, then falls, and so on, relative to the conveyor 1 and the direction of travel of its belt. The horizontal and vertical movements of the nozzle 2 can be successive or simultaneous. The axis 2b always remains parallel to itself during the cycle of movement of the nozzle 2. The cycle of movement of the nozzle 2 in terms of distance and speed pattern can advantageously be repeated identically, thus the section of the resulting bar varies according to an identical pattern which is repeated throughout its length. This possibility is illustrated by the four arrows forming the parallelogram 16 and which represent the movements of the nozzle 2. The combination of the horizontal movement and the vertical movement allows different bar shapes to be obtained compared with the installation of Figure 1.

In another embodiment schematically illustrated by Figure 7, the nozzle 2 is mounted in rotation about an axis 17 horizontal and perpendicular to the direction of travel of the conveyor belt 1. The operation is identical to the installation of Figure 1, except as regards the movement of the nozzle 2. In this case, the nozzle 2 is driven by a swinging movement forward/backward relative to the conveyor 1. The swinging movement is indicated in Figure 7 by the double arrow 18. The axis 2b of the nozzle 2 always remains situated in the same vertical plane parallel to the direction of travel of the conveyor belt 1. Once again, the swinging movement allows different bar shapes to be obtained compared with the installation of Figure 1.

For all of the embodiments combining a movement of the nozzle 2 with a conveyor belt 1 travelling at constant speed, it is preferable to ensure that the average value of the component of the vector speed of movement of the nozzle 2 according to the direction of travel of the conveyor belt 1, during movement of the nozzle according to the direction of travel of the conveyor belt 1, is greater than the speed of travel of the conveyor belt. Figure 11 shows the instantaneous speed vector V₂ of the nozzle 2 at a given moment during its movement forwards in the direction of travel of the horizontal conveyor belt 1. Figure 11 shows its horizontal component V_{2H} obtained by projection of the vector V₂ on a straight line (H) parallel to the direction of travel of the conveyor belt 1 and its vertical component V_{2V} obtained by projection of the vector V₂ on a straight line (V) perpendicular to the conveyor belt 1. This measure obtains the formation of a mass of extruded product on the conveyor belt 1 when the nozzle 2 moves forwards compared to the case of the prior art having a fixed nozzle 2 and a constant speed of travel of the conveyor belt 1. This results in a local increase in the section of the bar. By contrast, the backwards movement of the nozzle 2 produces a local decrease in the section of the bar compared to the case of the prior art having a fixed nozzle 2 and a constant speed of travel of the conveyor belt 1. It is also preferable that the speed of extrusion of the product is at least equal to and more advantageously greater than the speed of travel of the conveyor belt 1, which allows the shape of the extruded product to be preserved.

In yet another embodiment, the nozzle 2 is mounted fixed. In this case, the speed of travel of the conveyor belt 1 is not kept constant, but is modulated around an average value. This allows the same relative movement to be obtained as in the case of the installation of Figure 1. In yet another embodiment, the conveyor I is replaced by a fixed flat support. In this case, the nozzle 2 travels in a straight line above the flat support. The speed of travel of the nozzle 2 is modulated in order to obtain the same effect as in the case of the installation of Figure 1. A vertical movement of the nozzle 2 or a swinging movement in a vertical plane can also be provided, in a similar way to the embodiments described previously. Nevertheless, embodiments with a conveyor 1 having a belt travelling at constant speed are preferred because of the ease of use and the resulting compactness.

For all of the embodiments mentioned above and as illustrated in Figure 10, there may also be provided an additional movement of the nozzle 2 relative to an axis 31 which is both perpendicular to the axis 2b of the nozzle 2 and comprised in a vertical plane comprising the direction of travel of the conveyor bell 1. In Figure 10, only the nozzle 2 is shown, in a perspective view. The arrow 6 indicates the reciprocating movement of the embodiment of Figure 1. The axis 31 is fixed relative to the nozzle 2 during its horizontal reciprocating movement or other movement described in relation to Figure 6 or 7. Thus, during extrusion, the nozzle 2 is driven by a swinging movement about the axis 31 which is combined with the horizontal reciprocating movement 6 or with the movement previously described in relation to Figure 6 or 7. This swinging movement is explained symbolically by the double arrow 32. This measure allows a zigzag or slight snaking effect to be obtained in the lengthwise direction of the bar obtained which, overall, remains rectilinear. The movement of the nozzle 2 preferably occurs in a symmetrical manner relative to a vertical plane parallel to the direction of travel of the conveyor belt 1.

As a variant, a lateral translational reciprocating movement of the nozzle 2 can be envisaged which combines with the horizontal forward/backward reciprocating movement 6 or those described previously in relation to Figures 5 and 6. In other words, the nozzle 2 also describes a reciprocating movement according to a horizontal direction perpendicular to the direction of travel of the conveyor belt 1. Once again, this measure allows a zigzag or snaking effect to be obtained in the lengthwise direction of the bar obtained which, overall, remains rectilinear.

According to another embodiment, the speed of extrusion at the outlet of the nozzle 2 is varied. This measure allows the quantity of extruded product deposited on the flat support per unit of length in the direction of travel to be varied. In this case it can be provided that the nozzle 2 is fixed relative to the conveyor 1 and that the conveyor belt travels at a constant speed. Advantageously, the variation in speed consists of a repetitive extrusion speed pattern in order to obtain for the bar a repetitive raised pattern. It is also possible to combine the variation in the speed of extrusion with the previous embodiments based on the variation of the quantity of extruded product deposited on the conveyor belt 1 per unit of length in the direction of travel by means of the relative movement between the nozzle and the conveyor belt.

According to yet another embodiment, the conveyor 1 is replaced with a long, fixed table above which the nozzle 2 moves in order to provide overall a rectilinear travel of the nozzle relative to the table. Thus, a bar or strip of extruded product is formed on the table. The variation in the quantity of extruded product deposited on the flat support per unit of length in the direction of travel is provided once again either by the movement of the nozzle relative to the table, or by the variation in the speed of extrusion, or by a combination of the two. Nevertheless the use of an endless conveyor belt 1 is simpler to implement.

Of course, the present invention is not limited to the examples and the embodiments described and illustrated, but it is capable of many variants accessible to a person skilled in the art. Thus, the embodiments of the invention were described for the production of frozen bars which usually have a maximum section which does not exceed 1000 mm², but it can also be used in order to produce bars with a larger section exceeding for example 2500 mm², or even 6000 mm², in particular frozen logs. The invention and each of the embodiments described can also be used in the field of non-frozen bars, for example in the field of food for animals, in particular for pets, in particular for the production of "snacks" for the latter. It is worth noting that the obtained bar is a plain food product. In particular, the bar is not made of overlapping extruded lanes of products. On the contrary, the bar itself is extruded and the variable section of the bar is advantageously obtained by forming masses of extruded products resulting in a local increase in the section of the bar, each mass being followed by a local decrease in the section of the bar.

## Claims

1. A method for the production of an extruded bar of plain food product with an extrusion nozzle (2), the bar of plain food product being not made of overlapping extruded lanes of product, comprising the stages of:
- extrusion of the product through the nozzle above a flat support (1) so that the extruded product (4) is deposited on the flat support; and
- during the extrusion, relative movement (1a, 6) between the nozzle and the flat support, the movement producing overall a relative rectilinear travel (1a) between the nozzle and the flat support in order to form the bar of product;
**characterized in that**
- during the extrusion, variation in the quantity of extruded product deposited on the flat support per unit of length in the direction of travel (1a) so as to provide the bar with a variable section along its length and raised patterns on the top of the bar.

2. The method according to claim 1 which, during the stage of extrusion, comprises the obtaining of a variation in the quantity of extruded product deposited on the flat support per unit of length in the direction of travel, by the relative movement (6; 16; 18) between the nozzle and the flat support.

3. The method according to claim 1 or 2 which, during the stage of extrusion, comprises:
- keeping the axis (2b) of the nozzle in the same vertical plane associated with the flat support and parallel to the direction of relative rectilinear travel (1a) between the nozzle and the flat support.

4. The method according to any one of claims 1 to 3 which, during the stage of extrusion, comprises:
- the application of a unidirectional rectilinear movement (1a) at a constant speed to the flat support during extrusion; and
- the application to the nozzle of a movement (6; 16; 18) having a reciprocating component according to the direction of movement of the flat support.

5. The method according to claim 4 which, during the stage of extrusion, comprises:
- ensuring that the average value of the component (V_{2H}) of the vector speed (V₂) of movement of the nozzle according to the direction of movement of the flat support, during the movement of the nozzle in the direction (1a) of movement of the flat support, is greater than the speed of movement of the flat support.

6. The method according to claim 4 or 5 which, during the stage of extrusion, comprises:
- ensuring that the speed of extrusion of the product is greater than or equal to the speed of movement of the flat support.

7. The method according to any one of claims 4 to 6 which, during the stage of extrusion, comprises:
- keeping the axis of the nozzle parallel to itself during the movement of the nozzle, the nozzle only moving according to one direction (6) parallel to the flat support.

8. The method according to any one of claims 4 to 6 which, during the stage of extrusion, comprises:
- keeping the axis of the nozzle parallel to itself during the movement of the nozzle, the movement (16) of the nozzle comprising at least one component parallel to the flat support and at least one component perpendicular to the flat support.

9. The method according to any one of claims 4 to 6 which, during the stage of extrusion, comprises:
- swinging (18) of the nozzle about an axis (17) both parallel to the flat support and perpendicular to the direction of travel of the flat support.

10. The method according to any one of claims 4 to 9 which, during the stage of extrusion, comprises:
- the repetitive movement of the nozzle along the same path with the same speed pattern.

11. The method according to any one of claims 4 to 10 which, during the stage of extrusion, comprises:
- keeping the angle (A) between the axis of the nozzle and the flat support between -5 and +45 degrees, the nozzle being oriented in the direction of travel of the flat support.

12. The method according to any one of claims 4 to 11, comprising:
- the application, in a continuous manner, of the unidirectional rectilinear movement at a constant speed of the flat support during the extrusion; and
- cutting the bar of product up into discontinuous elements.

13. The method according to any one of claims 4 to 12 which comprises the provision of the flat support in the form of an endless conveyor belt (1).

14. The method according to any one of claims 1 to 13, comprising the horizontal arrangement of the flat support.

15. The method according to any one of claims 1 to 14 which, during the stage of extrusion, comprises:
- keeping the speed of extrusion of the product constant.

16. The method according to any one of claims 1 to 15, in which the food product comprises at least one frozen composition, the method comprising a stage of cooling of the bar formed on the flat support.

17. The method according to any one of claims 1 to 16 which comprises providing the nozzle with lateral cheeks (11, 12) projecting outwards relative to the outlet of the nozzle.

18. The method according to any one of claims 1 to 16 in which, during the extrusion, the variation in the quantity of extruded product provide also raised patterns on the lateral sides of the bar.

19. The method according to any one of claims 1 to 18, in which the nozzle comprises two superimposed outlets (23, 24) having a common wall (25) set back relative to the end contour of the nozzle, the method comprising the extrusion of a respective food composition through each of the outlets of the nozzle.

20. The method according to any one of claims 1 to 19, also comprising a stage of coating the bar.

21. The method according to any one of claims 1 to 20, wherein the nozzle is located at a distance above the flat support which is less than or equal to the height of the nozzle.

22. The method according to any one of claims 1 to 21, comprising the step of:
- during the extrusion, variation in the quantity of extruded product deposited on the flat support per unit of length in the direction of travel (1a) so as to provide the bar with a variable section along its length in the form of a repetitive pattern of a mass of extruded product resulting in a local increase in the section of the bar followed by a local decrease in the section of the bar.

23. A device for the production of an extruded bar of plain food product not made of overlapping extruded lanes of product, comprising:
- an endless conveyor belt (1); and
- a nozzle (2) for extrusion of the product situated above the conveyor belt so that the extruded product is deposited on the conveyor belt;
in which the conveyor belt is driven by a unidirectional rectilinear movement at a constant speed during extrusion;
**characterized in that**
the nozzle is driven by a movement with a reciprocating component (6, 16, 18) according to the direction of movement of the conveyor belt so as to provide the bar with a variable section along its length and raised patterns on the top of the bar.

24. The device according to claim 23, comprising a cooling tunnel into which the conveyor belt passes.

25. The device according to claim 23 or 24, provided for implementing the method according to any one of claims 4 to 22.

## Patentansprüche

1. Verfahren zur Herstellung eines extrudierten Riegels aus einfachem Lebensmittelprodukt mit einer Extrusionsdüse (2), wobei der Riegel aus einfachem Lebensmittelprodukt nicht aus überlappenden extrudierten Produktbahnen hergestellt wird, umfassend folgende Schritte:
- Extrusion des Produkts durch die Düse über einer flachen Auflage (1), derart, dass das extrudierte Produkt (4) auf der flachen Auflage abgelegt wird; und
- relative Bewegung (1a, 6) zwischen der Düse und der flachen Auflage während der Extrusion, wobei die Bewegung insgesamt eine relative geradlinige Bewegung (1a) zwischen der Düse und der flachen Auflage ergibt, um den Riegel aus Produkt zu formen;
**gekennzeichnet durch**
- Variieren, während der Extrusion, der Menge an extrudiertem Produkt, die auf der flachen Auflage je Längeneinheit in der Bewegungsrichtung (1a) abgelegt wird, um den Riegel mit einem variablen Querschnitt entlang seiner Länge und erhabenen Mustern an der Oberseite des Riegels zu versehen.

2. Verfahren nach Anspruch 1, welches während des Extrusionsschritts das Erzielen einer Variation der Menge an extrudiertem Produkt, die auf der flachen Auflage je Längeneinheit in der Bewegungsrichtung abgelegt wird, durch die relative Bewegung (6; 16; 18) zwischen der Düse und der flachen Auflage umfasst.

3. Verfahren nach Anspruch 1 oder 2, welches während des Extrusionsschritts umfasst:
- Halten der Achse (2b) der Düse in derselben senkrechten Ebene, die der flachen Auflage zugeordnet ist, und parallel zu der Richtung der relativen geradlinigen Bewegung (1a) zwischen der Düse und der flachen Auflage.

4. Verfahren nach einem beliebigen der Ansprüche 1 bis 3, welches während des Extrusionsschritts umfasst:
- Anwenden einer in eine Richtung verlaufenden geradlinigen Bewegung (1a) mit einer konstanten Geschwindigkeit auf die flache Auflage während der Extrusion; und
- Anwenden einer Bewegung (6; 16; 18), welche eine hin- und hergehende Komponente entsprechend der Bewegungsrichtung der flachen Auflage aufweist, auf die Düse.

5. Verfahren nach Anspruch 4, welches während des Extrusionsschritts umfasst:
- Sicherstellen, dass der Durchschnittswert der Komponente (V_{2H}) der Vektorgeschwindigkeit (V₂) der Bewegung der Düse entsprechend der Bewegungsrichtung der flachen Auflage während der Bewegung der Düse in die Bewegungsrichtung (1a) der flachen Auflage größer als die Bewegungsgeschwindigkeit der flachen Auflage ist.

6. Verfahren nach Anspruch 4 oder 5, welches während des Extrusionsschritts umfasst:
- Sicherstellen, dass die Extrusionsgeschwindigkeit des Produkts größer gleich der Bewegungsgeschwindigkeit der flachen Auflage ist.

7. Verfahren nach einem beliebigen der Ansprüche 4 bis 6, welches während des Extrusionsschritts umfasst:
- Halten der Achse der Düse parallel zu sich selbst während der Bewegung der Düse, wobei sich die Düse nur gemäß einer Richtung (6) parallel zu der flachen Auflage bewegt.

8. Verfahren nach einem beliebigen der Ansprüche 4 bis 6, welches während des Extrusionsschritts umfasst:
- Halten der Achse der Düse parallel zu sich selbst während der Bewegung der Düse, wobei die Bewegung (16) der Düse mindestens eine Komponente parallel zu der flachen Auflage und mindestens eine Komponente im rechten Winkel zu der flachen Auflage umfasst.

9. Verfahren nach einem beliebigen der Ansprüche 4 bis 6, welches während des Extrusionsschritts umfasst:
- Schwenken (18) der Düse um eine Achse (17) sowohl parallel zu der flachen Auflage als auch im rechten Winkel zu der Bewegungsrichtung der flachen Auflage.

10. Verfahren nach einem beliebigen der Ansprüche 4 bis 9, welches während des Extrusionsschritts umfasst:
- die wiederkehrende Bewegung der Düse entlang desselben Wegs mit demselben Geschwindigkeitsmuster.

11. Verfahren nach einem beliebigen der Ansprüche 4 bis 10, welches während des Extrusionsschritts umfasst:
- Halten des Winkels (A) zwischen der Achse der Düse und der flachen Auflage zwischen -5 und +45 Grad, wobei die Düse in der Bewegungsrichtung der flachen Auflage ausgerichtet ist.

12. Verfahren nach einem beliebigen der Ansprüche 4 bis 11, umfassend:
- Anwenden, auf kontinuierliche Weise, der in eine Richtung verlaufenden geradlinigen Bewegung mit einer konstanten Geschwindigkeit der flachen Auflage während der Extrusion; und
- Schneiden des Riegels aus Produkt zu getrennten Elementen.

13. Verfahren nach einem beliebigen der Ansprüche 4 bis 12, welches das Vorsehen der flachen Auflage in Form eines Endlosförderbands (1) umfasst.

14. Verfahren nach einem beliebigen der Ansprüche 1 bis 13, umfassend die waagrechte Anordnung der flachen Auflage.

15. Verfahren nach einem beliebigen der Ansprüche 1 bis 14, welches während des Extrusionsschritts umfasst:
- Konstanthalten der Extrusionsgeschwindigkeit des Produkts.

16. Verfahren nach einem beliebigen der Ansprüche 1 bis 15, wobei das Lebensmittelprodukt mindestens eine gefrorene Zusammensetzung umfasst, wobei das Verfahren einen Schritt des Kühlens des auf der flachen Auflage geformten Riegels umfasst.

17. Verfahren nach einem beliebigen der Ansprüche 1 bis 16, welches das Versehen der Düse mit seitlichen Wangen (11, 12) umfasst, die relativ zu dem Auslass der Düse nach außen vorstehen.

18. Verfahren nach einem beliebigen der Ansprüche 1 bis 16, wobei während der Extrusion das Variieren der Menge an extrudiertem Produkt auch erhabene Muster an den seitlichen Seiten des Riegels schafft.

19. Verfahren nach einem beliebigen der Ansprüche 1 bis 18, wobei die Düse zwei übereinander angeordnete Auslässe (23, 24) umfasst, die eine gemeinsame Wand (25) aufweisen, welche relativ zu der Endkontur der Düse zurückversetzt ist, wobei das Verfahren die Extrusion einer entsprechenden Lebensmittelzusammensetzung durch jeden der Auslässe der Düse umfasst.

20. Verfahren nach einem beliebigen der Ansprüche 1 bis 19, ebenfalls umfassend einen Schritt des Überziehens des Riegels.

21. Verfahren nach einem beliebigen der Ansprüche 1 bis 20, wobei die Düse in einem Abstand über der flachen Auflage angeordnet ist, der kleiner gleich der Höhe der Düse ist.

22. Verfahren nach einem beliebigen der Ansprüche 1 bis 21, umfassend den Schritt des:
- Variierens, während der Extrusion, der Menge an extrudiertem Produkt, die auf der flachen Auflage je Längeneinheit in der Bewegungsrichtung (1a) abgelegt wird, um den Riegel mit einem variablen Querschnitt entlang seiner Länge in Form eines wiederkehrenden Musters aus einer Masse von extrudiertem Produkt zu versehen, was eine lokalen Vergrößerung des Querschnitts des Riegels gefolgt von einer lokalen Verkleinerung des Querschnitts des Riegels ergibt.

23. Vorrichtung zur Herstellung eines extrudierten Riegels aus einfachem Lebensmittelprodukt, der nicht aus überlappenden extrudierten Produktbahnen hergestellt wird, umfassend:
- ein Endlosförderband (1); und
- eine Düse (2) zur Extrusion des Produkts, die über dem Förderband angeordnet ist, derart, dass das extrudierte Produkt auf das Förderband abgelegt wird;
wobei das Förderband während der Extrusion durch eine in eine Richtung verlaufende geradlinige Bewegung mit konstanter Geschwindigkeit angetrieben wird;
**dadurch gekennzeichnet, dass**
die Düse durch eine Bewegung mit einer hin- und hergehenden Komponente (6, 16, 18) entsprechend der Bewegungsrichtung des Förderbandes angetrieben wird, um den Riegel mit einem variablen Querschnitt entlang seiner Länge und erhabenen Mustern an der Oberseite des Riegels zu versehen.

24. Vorrichtung nach Anspruch 23, umfassend einen Kühltunnel, in den das Förderband einfährt.

25. Vorrichtung nach Anspruch 23 oder 24, welche zum Umsetzen des Verfahrens nach einem beliebigen der Ansprüche 4 bis 22 vorgesehen ist.

## Revendications

1. Procédé de fabrication d'une barre extrudée de produit alimentaire simple avec une buse d'extrusion (2), la barre extrudée de produit alimentaire n'étant pas constituée de rangées du produit se chevauchant, comprenant les étapes de :
- extrusion du produit à travers la buse au-dessus d'un support plan (1) pour que le produit extrudé (4) se dépose sur le support plan ; et
- pendant l'extrusion, déplacement relatif (1a, 6) entre la buse et le support plan, le déplacement procurant globalement un défilement rectiligne relatif (1a) entre la buse et le support plan pour former la barre de produit ;
**caractérisé en ce que**
- pendant l'extrusion, on fait varier la quantité de produit extrudé déposé sur le support plan par unité de longueur dans la direction du défilement (1a) pour obtenir une barre présentant une section variable suivant sa longueur et des motifs en relief sur le dessus de la barre.

2. Procédé selon la revendication 1, comprenant, pendant l'étape d'extrusion, l'obtention d'une variation de la quantité de produit extrudé déposé sur le support plan par unité de longueur dans la direction du défilement, par le déplacement relatif (6 ; 16 ; 18) entre la buse et le support plan.

3. Procédé selon la revendication 1 ou 2, comprenant, pendant l'étape d'extrusion :
- le maintien de l'axe (2b) de la buse dans un même plan vertical lié au support plan et parallèle à la direction de défilement rectiligne relatif (1a) entre la buse et le support plan.

4. Procédé selon l'une quelconque des revendications 1 à 3, comprenant, pendant l'étape d'extrusion :
- l'application d'un mouvement rectiligne unidirectionnel (1a) à vitesse constante au support plan pendant l'extrusion ; et
- l'application à la buse d'un mouvement (6 ; 16 ; 18) présentant une composante de va-et-vient suivant la direction du mouvement du support plan.

5. Procédé selon la revendication 4, comprenant, pendant l'étape d'extrusion :
- le fait d'assurer que la valeur moyenne de la composante (V2H) du vecteur vitesse (V2) de déplacement de la buse suivant la direction du mouvement du support plan, lors du déplacement de la buse dans le sens (1a) du mouvement du support plan, soit supérieure à la vitesse de mouvement du support plan.

6. Procédé selon la revendication 4 ou 5, comprenant, pendant l'étape d'extrusion :
- le fait d'assurer que la vitesse d'extrusion du produit soit supérieure ou égale à la vitesse de mouvement du support plan.

7. Procédé selon l'une quelconque des revendications 4 à 6, comprenant, pendant l'étape d'extrusion :
- le maintien de l'axe de la buse parallèle à lui-même durant le mouvement de la buse, la buse se déplaçant uniquement suivant une direction (6) parallèle au support plan.

8. Procédé selon l'une quelconque des revendications 4 à 6, comprenant, pendant l'étape d'extrusion :
- le maintien de l'axe de la buse parallèle à lui-même durant le mouvement de la buse, le mouvement (16) de la buse comprenant au moins une composante parallèle au support plan et au moins une composante perpendiculaire au support plan.

9. Procédé selon l'une quelconque des revendications 4 à 6, comprenant, pendant l'étape d'extrusion :
- une oscillation (18) de la buse autour d'un axe (17) à la fois parallèle au support plan et perpendiculaire à la direction de défilement du support plan.

10. Procédé selon l'une quelconque des revendications 4 à 9, comprenant, pendant l'étape d'extrusion :
- le déplacement répétitif de la buse suivant un même chemin avec un même diagramme de vitesse.

11. Procédé selon l'une quelconque des revendications 4 à 10, comprenant, pendant l'étape d'extrusion :
- le maintien de l'angle (A) entre l'axe de la buse et le support plan entre -5 et +45 degrés, la buse étant orientée dans le sens de défilement du support plan.

12. Procédé selon l'une quelconque des revendications 4 à 11, comprenant :
- l'application du mouvement rectiligne unidirectionnel à vitesse constante du support plan pendant l'extrusion de façon continue ; et
- un découpage de la barre de produit en éléments discrets.

13. Procédé selon l'une quelconque des revendications 4 à 12, comprenant la fourniture du support plan sous la forme d'une bande de convoyage sans fin (1).

14. Procédé selon l'une quelconque des revendications 1 à 13, comprenant l'agencement horizontal du support plan.

15. Procédé selon l'une quelconque des revendications 1 à 14, comprenant, pendant l'étape d'extrusion :
- le fait de maintenir la vitesse d'extrusion du produit constante.

16. Procédé selon l'une quelconque des revendications 1 à 15, dans lequel le produit alimentaire comprend au moins une composition glacée, le procédé comprenant une étape de refroidissement de la barre formée sur le support plan.

17. Procédé selon l'une quelconque des revendications 1 à 16, comprenant le fait de prévoir la buse avec des joues latérales (11, 12) en saillie par rapport à la sortie de la buse.

18. Procédé selon l'une quelconque des revendications 1 à 16 dans lequel, pendant l'extrusion, la variation de la quantité de produit extrudé crée également des motifs surélevés sur les côtés latéraux de la barre.

19. Procédé selon l'une quelconque des revendications 1 à 18, dans lequel la buse comprend deux sorties (23, 24) superposées et présentant une paroi commune (25) en retrait par rapport au contour d'extrémité de la buse, le procédé comprenant l'extrusion d'une composition alimentaire respective à travers chacune des sorties de la buse.

20. Procédé selon l'une quelconque des revendications 1 à 19, comprenant en outre une étape d'enrobage de la barre.

21. Procédé selon l'une quelconque des revendications 1 à 20 dans lequel la buse est située à une distance au-dessus du support plan qui est inférieure ou égale à la hauteur de la buse.

22. Procédé selon l'une quelconque des revendications 1 à 21, comprenant :
- pendant l'extrusion, une variation de la quantité de produit extrudé déposé sur le support plan par unité de longueur dans la direction du défilement (1a) pour procurer de façon répétitive la formation d'amas de produit extrudé dont résulte une augmentation locale de la section de la barre suivi d'une diminution locale de la section de la barre.

23. Dispositif de fabrication d'une barre extrudée de produit alimentaire simple n'étant pas constituée de rangées du produit se chevauchant, comprenant :
- une bande de convoyage sans fin (1) ; et
- une buse d'extrusion (2) du produit située au-dessus de la bande de convoyage pour que le produit extrudé se dépose sur la bande de convoyage ;
dans lequel la bande de convoyage est animée d'un mouvement rectiligne unidirectionnel à vitesse constante pendant l'extrusion ;
**caractérisé en ce que**
la buse est animée d'un mouvement présentant une composante de va-et-vient (6, 16, 18) suivant la direction du mouvement de la bande de convoyage pour obtenir une barre présentant une section variable suivant sa longueur et des motifs en relief sur le dessus de la barre.

24. Dispositif selon la revendication 23, comprenant un tunnel de refroidissement dans lequel passe la bande de convoyage.

25. Dispositif selon la revendication 23 ou 24, prévu pour mettre en oeuvre le procédé selon l'une quelconque des revendications 4 à 22.
